# EUROPÄISCHE PATENTSCHRIFT

(11) **EP 1 425 953 B1**
(45) Veröffentlichungstag und Bekanntmachung des Hinweises auf die Patenterteilung: **12.04.2006**
(21) Anmeldenummer: 03027713.1
(22) Anmeldetag: 02.12.2003
(51) Int. Cl.: A01D 41/12, A01F 12/60

(54) **Erntemaschine mit Entladeförderer**
Harvester with unloading conveyor
Machine de récolte avec convoyeur de décharge

(30) Priorität: 04.12.2002 US 309977
(43) Veröffentlichungstag der Anmeldung: 09.06.2004
(73) Patentinhaber: DEERE & COMPANY, Moline, Illinois 61265-8098 (US)
(72) Erfinder: Pope, Glenn E., IL 61486 Viola (US); VanDeVoorde, John P., IL 61262 Lynn Center (US); Herlyn, Ryan S., IL 61277 Prophetstown (US)
(74) Vertreter: Holst, Sönke

(56) Entgegenhaltungen:
- US-A- 3 664 525
- US-B1- 6 285 198

## Beschreibung

Die Erfindung betrifft eine Erntemaschine, insbesondere einen Mähdrescher, mit einem Vorratsbehälter für geerntetes Erntegut und einem Entladeförderer, der mit einer Betriebsgeschwindigkeit betreibbar ist, um Erntegut aus dem Vorratsbehälter hinauszufördern (Siehe z.B. (US-A-3 664 525).

Landwirtschaftlich angebautes Erntegut kann als essbares Erntegut, nichtessbares Erntegut, genetisch modifizierte Organismen (GMO), nichtgenetisch modifizierte Organismen, organisch angebaut, pestizidfrei oder entsprechend anderer Eigenschaften klassifiziert werden. Nichtessbares Erntegut können beispielsweise Fasern liefernde Pflanzen, Baumwolle oder Gummi sein. Genetisch modifiziertes Erntegut kann Gemüse sein, das genetisch manipuliert wurde, um die mögliche Regalstandzeit gegenüber traditionell angebautem Gemüse zu verlängern. Organisch angebautes Erntegut wird von Pflanzen geerntet, die ohne Beaufschlagung mit bestimmten Pestiziden, Herbiziden oder anderen Chemikalien angebaut wurden.

Das Erntegut kann entsprechend spezifischer Eigenschaften oder Spezifikationen angebaut werden. Die Eigenschaften des Ernteguts können auf der genetischen Zusammensetzung des Ernteguts oder den Anbaupraktiken des Ernteguts beruhen, oder auf beiden. Es kann beispielsweise eine bestimmte Art von Mais angebaut werden, der aufgrund genetischer oder umgebungsbedingter Faktoren einen größeren Ölgehalt hat als andere Arten. In ähnlicher Weise kann eine bestimmte Art von Sojabohnen angebaut werden, die einen anderen Proteingehalt oder eine andere wünschenswerte Eigenschaft hat. Ein Verarbeiter, eine pharmazeutische Gesellschaft, ein Hersteller oder ein anderer Betroffener kann den Wunsch haben, landwirtschaftliche Produkte mit spezifischen Eigenschaften von einem Anbauer oder anderen Lieferanten zu erwerben. Der Anbauer oder Lieferant kann sich wünschen, für Erntegut mit spezifischen Eigenschaften einen höheren Preis zu verlangen als für ein handelsübliches Erntegut. Der Erwerber des landwirtschaftlichen Produkts kann eine hinreichende Bestätigung wünschen, dass das gekaufte landwirtschaftliche Produkt tatsächlich die gesuchten Eigenschaften aufweist.

Es somit besteht ein Bedarf daran, Erntegut mit spezifischen Eigenschaften während des Anbaus und der Verteilung und jeglicher daraus abgeleiteter Produkte genau zu identifizieren. Außerdem kann ein Erwerber eines landwirtschaftlichen Produkts oder Ernteguts die Möglichkeit wünschen oder verlangen, die Identität des Ernteguts mit spezifischen Eigenschaften nachzuverfolgen, um das Vorhandensein von Eigenschaften des Ernteguts oder die Abwesenheit unerwünschter Eigenschaften als Bedingung für eine kommerzielle Transaktion zu überprüfen.

Es besteht demnach ein Bedarf, Erntegut während der Ernte zu trennen, damit keine Vermischung von Erntegut oder Erntegutresten mit verschiedenen Eigenschaften stattfindet. Nach dem Entladen eines Vorratsbehälters eines Mähdreschers können Korn und Verunreinigungen in den unteren Bereichen des Vorratsbehälters und im Entladerohr verbleiben, die nicht ohne Schwierigkeiten mechanisch entfernt werden können.

Derzeit muss der Bediener zur gründlichen Reinigung des Vorratsbehälters manchmal in einen sehr kleinen Raum kriechen, der nicht vom Erdboden aus zugänglich ist und Korn und Verunreinigungen daraus heraus saugen oder fegen. Während des Reinigens des Vorratsbehälters ist es schwierig, unter den Abdeckungen der quer verlaufenden Schneckenförderer und auch in versteckten Bereichen des Vorratsbehälters zu reinigen. Es ist auch schwierig, Entladerohre zu reinigen und ihre Reinigung zu überprüfen, da nur begrenzter Zugang und kein effektives Verfahren bestehen, das Entladerohr zur adäquaten Reinigung zu inspizieren. Die typische Zeit und der zugehörige Aufwand zur vollständigen Entfernung des gesamten Korns und sämtlicher Erntegutreste aus dem Mähdrescher, insbesondere aus dem Vorratsbehälter und dem Entladerohr ist sehr lang und die Aufgabe ist schwierig.

Das der Erfindung zu Grunde liegende Problem wird darin gesehen, die genannten Probleme zu überwinden.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt einen zusätzlichen Drehantrieb für wenigstens einen Entladeförderer vor. Der Entladeförderer ist im normalen Betrieb drehbar, um Erntegut aus einem Vorratsbehälter der Erntemaschine abzutransportieren, beispielsweise aus einem Vorratsbehälter eines Mähdreschers. Der zusätzliche Drehantrieb ist derart konfiguriert, dass er den Entladeförderer während eines Reinigungsvorgangs des Entladeförderers dreht, um einen Luftstrom bereitstellende Düsen oder andere Mittel (z. B. eine mit einem Besen oder Staubsauger arbeitende Person) dabei zu unterstützen, verbliebene Erntegutreste oder Verunreinigungen aus der Erntemaschine zu entfernen. Der zusätzliche Drehantrieb bewirkt eine Drehung des Entladeförderers mit einer kleineren Geschwindigkeit als beim normalen Entladebetrieb von Erntegut.

Auf diese Weise wird eine Möglichkeit bereitgestellt, zwischen der Ernte von Erntegut mit unterschiedlichen Eigenschaften den Entladeförderer einer Erntemaschine schnell, einfach und gründlich von Erntegut und Verunreinigungen zu befreien. Die Erfindung kann an Mähdreschern und beliebigen anderen Erntemaschinen verwendet werden, bei denen Erntegut in Vorratsbehältern zwischengelagert und durch Entladeförderer entleert wird, wie z. B. Maschinen zur Ernte von Rüben oder Kartoffeln.

Der zusätzliche Drehantrieb kann mit einer Kupplungsanordnung versehen sein, die zwischen dem zusätzlichen Drehantrieb und dem Entladeförderer angeordnet ist. Der Drehantrieb hat eine hinreichende Leistung, um den Entladeförderer über die Kupplungseinrichtung zu drehen. In einer bevorzugten Ausführungsform der Erfindung ist der zusätzliche Drehantrieb während des normalen Betriebs des Entladeförderers ausgeschaltet und mechanisch vom Entladeförderer getrennt. Er kann aber auch permanent mechanisch mit dem Entladeförderer verbunden sein und im Normalbetrieb frei mitlaufen. Der zusätzliche Drehantrieb umfasst in der Regel einen Elektromotor.

Die Kupplungsanordnung umfasst vorzugsweise eine antreibende Riemenscheibe, die an einer Ausgangswelle des Drehantriebs befestigt ist, eine drehbar mit dem Entladeförderer gekoppelte, angetriebene Riemenscheibe und einen mit den Riemenscheiben zusammenwirkenden Riemen. Alternativ wäre auch die Verwendung einer elektromagnetischen Kupplung (so genannte Elektrokupplung) oder einer anderen Kupplungsart denkbar.

Weiterhin ist vorzugsweise eine Spanneinrichtung für den Riemen vorgesehen. Die Spanneinrichtung umfasst einen Zylinder, der zum Verändern des Abstands zwischen den Riemenscheiben angeordnet ist. Der Zylinder könnte auch eine dritte, mitlaufende Riemenscheibe bewegen, um den Riemen zu straffen oder zu entlasten.

Es wird weiterhin ein Schalter vorgeschlagen, mit dem ein Bediener den zusätzlichen Drehantrieb und vorzugsweise auch die Kupplungsanordnung betätigen kann. Der Schalter kann mit einem langgestreckten Kabel versehen sein, das den Schalter an einem Ende hat.

In einer bevorzugten Ausführungsform ist ein Steuersystem vorhanden, das den vom Bediener kontrollierten Schalter, eine Zeitsteuerungselektronik und eine hörbare Alarmeinrichtung umfasst. Das Steuersystem kann derart konfiguriert sein, dass die Zeitsteuerungselektronik nach einer Betätigung des Schalters den Betrieb des zusätzlichen Rotationsantriebs für eine vorbestimmte Zeitspanne verzögert, während der die hörbare Alarmeinrichtung erschallt.

Das vorliegende System ist vorzugsweise zum Drehen des Entladeschneckenförderers und der quer am Boden des Korntanks eines Mähdreschers angeordneten Schneckenförderer eingerichtet, um die Reinigung des Korntanks und des Entladerohrs zu erleichtern. Ein Vorzug des relativ langsamen zusätzlichen Rotationsantriebs besteht in der verminderten Verletzungsgefahr gegenüber eines bei normaler Entladegeschwindigkeit vollzogenen Reinigungsvorgangs.

In den Zeichnungen ist ein nachfolgend näher beschriebenes Ausführungsbeispiel der Erfindung dargestellt. Es zeigt:
- Fig. 1: eine schematische Seitenansicht einer Erntemaschine, in der die vorliegende Erfindung verwirklicht ist,
- Fig. 2: eine schematische Draufsicht auf die Erntemaschine aus Figur 1,
- Fig. 3: eine vergrößerte, perspektivische Teilansicht des Vorratsbehälters der Erntemaschine aus Figur 1,
- Fig. 4: eine von unten betrachtete vergrößerte, perspektivische Teilansicht des in Figur 3 gezeigten Vorratsbehälters,
- Fig. 5: eine Schnittansicht entlang der Linie 5-5 in Figur 2,
- Fig. 6: ein Schema des Antriebssystems des Entladeförderers,
- Fig. 7: eine von vorn aufgenommene, vergrößerte perspektivische Teilansicht eines zusätzlichen Antriebssystems für den Entladeförderer, und
- Fig. 8: eine von hinten aufgenommene, perspektivische Ansicht des zusätzlichen Antriebssystems aus Figur 7.

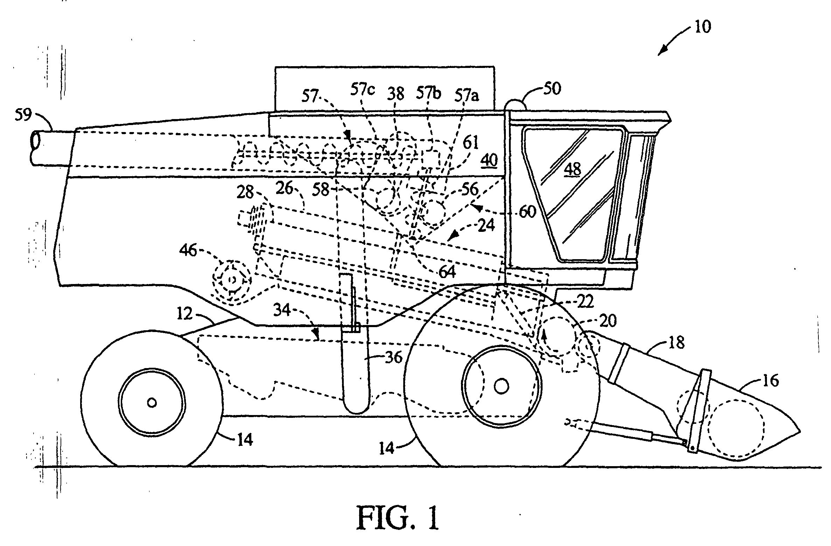

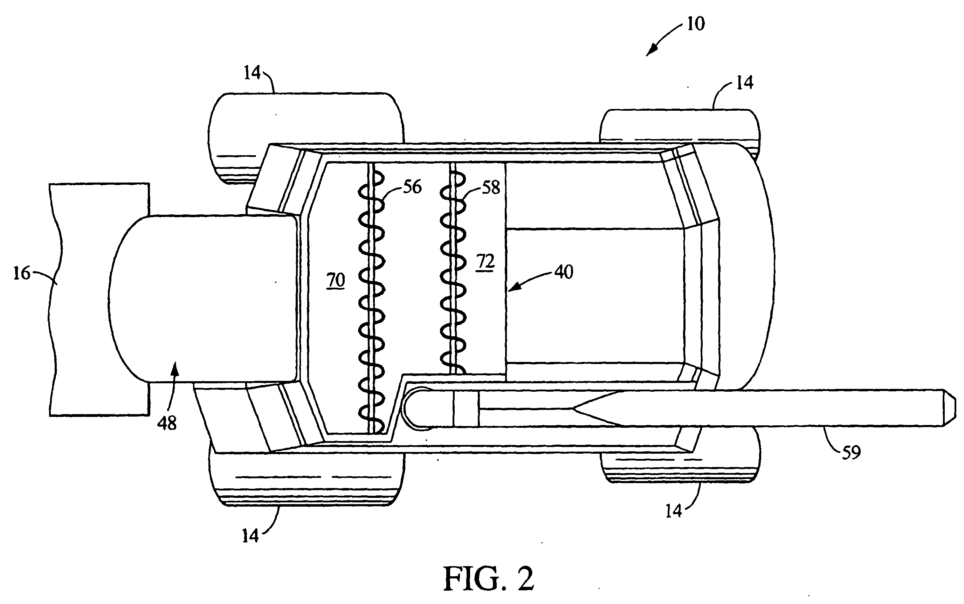

Die Figuren 1 und 2 zeigen einen landwirtschaftlichen Mähdrescher 10, der eine tragende Struktur 12 mit im Eingriff mit dem Erdboden befindlichen Mitteln 14 aufweist, die sich von der tragenden Struktur 12 nach unten erstrecken. Ein derartiger Mähdrescher ist in der US 6 285 198 detailliert beschrieben. Anstelle des dargestellten Axialmähdreschers kann die Erfindung auch an beliebigen anderen Typen von Mähdreschern verwendet werden, wie konventionellen Strohschüttlermaschinen. Ein Schneidwerk 16 wird verwendet, um Erntegut zu ernten und es einem Schrägförderer 18 zuzuführen. Das geerntete Gut wird durch den Schrägförderer 18 einer Leittrommel 20 zugeführt. Die Leittrommel 20 führt das Erntegut nach oben durch einen Einlassübergangsabschnitt 22 zu einer axialen Gutbearbeitungseinheit 24. Die axiale Gutbearbeitungseinheit 24 ist zwischen den Seitenwänden des Mähdreschers 10 angeordnet und wird von ihnen abgestützt.

Die axiale Gutbearbeitungseinheit 24 umfasst ein axiales Rotorgehäuse 26 und einen im Rotorgehäuse 26 angeordneten axialen Rotor 28. Das geerntete Gut tritt durch den Einlassübergangsabschnitt 22 in das Rotorgehäuse 26 ein. Der Rotor 28 ist mit einem Beschickungsabschnitt, einem Dreschabschnitt und einem Trennabschnitt ausgestattet. Das Rotorgehäuse 26 hat je einen entsprechenden Beschickungsabschnitt, Dreschabschnitt und Trennabschnitt.

Beide Gutbearbeitungsabschnitte des Rotors 28, der Dreschabschnitt und der Trennabschnitt sind mit Guteingriffszusammenbauten ausgestattet. Der Dreschabschnitt des Rotorgehäuses 26 ist mit einem Dreschkorb ausgestattet und der Trennabschnitt mit einem Rost. Aus der Gutmatte freigesetzte Körner und Spreu fallen durch den Dreschkorb und den Rost. Der Dreschkorb und der Rost verhindern den Durchtritt von Erntegut, das größer als Korn oder Kaff ist, in das Reinigungssystem 34.

Wie in der Figur 1 dargestellt, wird durch den Dreschkorb und den Rost fallendes Korn und Spreu dem Reinigungssystem 34 zugeführt, das die Spreu vom Korn trennt. Das saubere Korn wird dann durch einen Elevator 36 für sauberes Korn einem Fontänenschneckenförderer 38 zugeführt. Der Fontänenschneckenförderer 38 fördert das Korn in einen Vorratsbehälter 40 in der Art eines Korntanks. Der Elevator 36 für sauberes Korn und der Fontänenschneckenförderer 38 umfassen Mittel zum Bewegen des sauberen Korns vom Kornboden des Mähdreschers in den Vorratsbehälter 40. Das Korn wird durch einen Entladeförderer 57 in Form eines Schneckenförderers aus dem Vorratsbehälter 40 entfernt. Wenn das Stroh das Ende der Gutbearbeitungseinheit 24 erreicht hat, wird es durch einen Auslass einer Auswurftrommel 46 zugeführt. Die Auswurftrommel 46 fördert das Stroh zur Rückseite des Mähdreschers 10 hinaus. Die Bedienung des Mähdreschers 10 erfolgt von einer Bedienerkabine 48 aus.

Wenn der Vorratsbehälter 40 zu entleeren ist, führen quer angeordnete Entladeförderer 56 und 58 in Form von Schneckenförderern das Korn an die Seite des Vorratsbehälters 40, wo es mit dem Entladeförderer 57 in Berührung kommt, der das saubere Korn durch ein vertikales Entladerohr 61 und ein horizontales Entladerohr 59 leitet. Der Entladeförderer 57 umfasst einen vertikalen Abschnitt 57a, der sich zumindest teilweise innerhalb des Entladerohrs 61 befindet, ein rechtwinkliges Getriebe 57b, und einen horizontalen Abschnitt 57c innerhalb des Entladerohrs 59. Während einer Entladeoperation würde sich das Entladerohr 59 normalerweise von der Seite des Mähdreschers 10 nach außen erstrecken, so dass sauberes Korn einfacher in einen Wagen oder Anhänger geleitet werden kann.

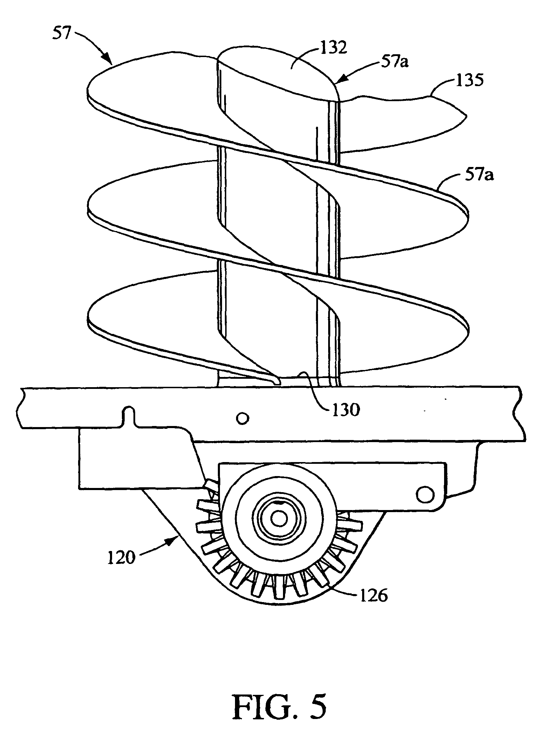

Der Vorratsbehälter 40 umfasst einen Trog 60, der einen größeren Trogbereich 70 und einen kleineren Trogbereich 72 umfasst, welche die horizontalen Entladeförderer 56 und 58 aufnehmen. Der Trog 60 ist zu einem Ladegehäuse oder Sumpf 64 hin offen. Der vertikale Abschnitt 57a des Entladeförderers 57 erstreckt sich durch das vertikale Rohr 61 und in den Sumpf 64 (s. Figur 5). Das durch die horizontalen Entladeförderer 56 und 58 horizontal durch den Trog 60 geförderte Korn wird in den Sumpf 64 abgegeben und mittels des vertikalen Abschnitts 57a durch das Rohr 61 und mittels des horizontalen Abschnitts 57 c durch das Entladerohr 59 entfernt.

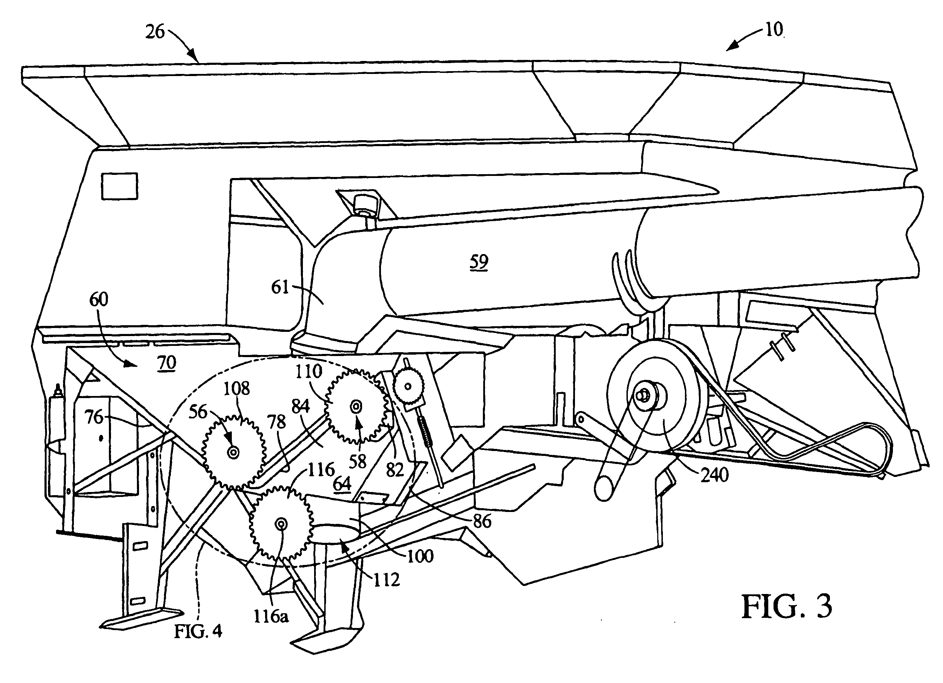

Wie in der Figur 3 illustriert, umfasst der größere Trogbereich 70 eine vordere geneigte Wand 76 und eine hintere geneigte Wand 78. Der kleinere Trogbereich 72 umfasst eine hintere geneigte Wand 82, die mit einer Krümmung in die hintere geneigte Wand 78 des größeren Trogbereichs 70 übergeht. Der Sumpf 64 umfasst parallele Seitenwände 84, die sich im Wesentlichen parallel zueinander und vertikal erstrecken und im Wesentlichen durchgehend an den geneigten Wänden 78, 82 befestigt sind. Nur die linke Seitenwand 84 des Sumpfs 64 ist in den Figuren sichtbar; die rechte Seitenwand des Sumpfs 64 hat im Wesentlichen dieselbe Form wie die linke Seitenwand 84.

Die Entladeförderer 56, 58 werden durch Ritzel 108, 110 angetrieben. Der Entladeförderer 57 wird durch ein rechtwinkliges Getriebe 112 angetrieben, das über eine Eingangswelle 116a durch ein Ritzel 116 angetrieben wird.

Eine Antriebsanordnung zur Drehung der Ritzel 108, 110, 116 beim normalen Kornentladebetrieb wird detaillierter in der US 4 967 863 A beschrieben, die hier durch Verweis mitaufgenommen wird. Die Antriebsanordnung kann auch dem Typ der kommerziell an Mähdreschern des Typs 9650 STS oder 9750 STS der Anmelderin verfügbaren Antriebsanordnung entsprechen.

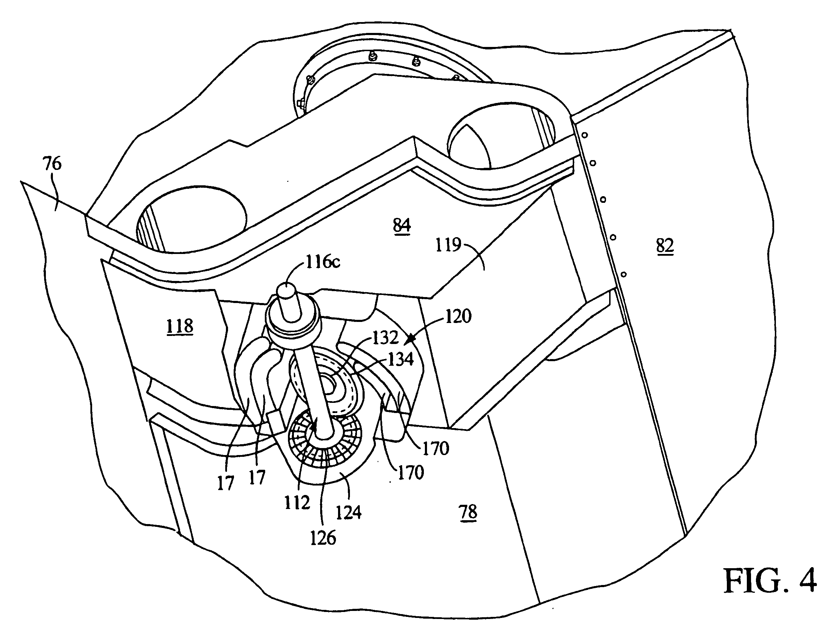

Wie in der Figur 4 dargestellt, umfasst der Sumpf 64 eine vordere schräglaufende Wand 118, eine hintere schräglaufende Wand 119 und ein Gussteil 120 für den Entladeförderer 57. Das Gussteil 120 ist an den schräglaufenden Wänden 118, 119 befestigt. Die vordere schräglaufende Wand 118 ist an der vorderen geneigten Wand 76 und an den Seitenwänden 84, 86 befestigt. Die hintere schräglaufende Wand 119 ist an der hinteren geneigten Wand 82 und den Seitenwänden 84 des Sumpfs 64 befestigt. Die Seitenwände 84 des Sumpfs 64, das Gussteil 120 und die Wände 118, 119 bilden einen im Wesentlichen eingeschlossenen Sumpf 64 mit Ausnahme der unten beschriebenen Ablauföffnungen. Wenn Stopfen oder Abdeckungen oder über Öffnungen geschraubte Dichtungen in oder an dem Gussteil 120 angebracht sind, ist der Sumpf 64 im Wesentlichen gegenüber den Trogbereichen 70, 72 abgedichtet.

Das Gussteil 120 umfasst Schwenklagerungen 122, 124 zum drehbaren Halten eines horizontalen Zahnradzusammenbaus 126 für das rechtwinklige Getriebe 112. Das Gussteil 120 umfasst außerdem eine Schwenklagerung 130 (Figur 5) zum Abstützen und drehbaren Halten einer vertikalen Achse 132 des Entladeförderers 57. Ein Zahnrad 134 mit vertikaler Achse ist an der Achse 132 befestigt. Eine Drehung des Zahnrads 134 dreht auch den Entladeförderer 57.

Das Gussteil 120 umfasst Ablauföffnungen 170, die es ermöglichen, Wasser und/oder Korn aus den untersten Bereichen des Sumpfs 64 ablaufen zu lassen. Beim Betrieb schließen Dichtringe und Platten oder Stopfen die Ablauföffnungen 170. Zwecks einer schnelleren Reinigung des Sumpfs 64 und des Trogs 60 können die Wände des Sumpfs 64 durch ein Gussteil ersetzt werden, das mehrere Gitterlochmuster aufweist, wie in der Patentanmeldung US 10/309975 beschrieben.

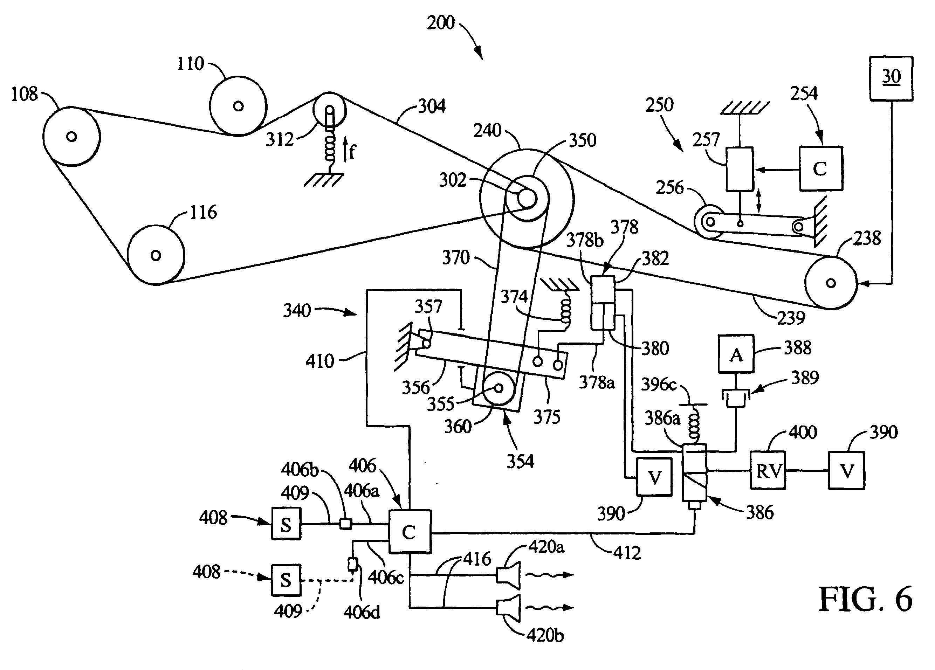

Die Figur 6 stellt ein Antriebssystem 200 für das Entladesystem für sauberes Korn zeichnerisch dar. Das Kornentladesystem wird durch eine erste Riemenscheibe 238 angetrieben, die durch die an sich bekannten Antriebsmittel 30 angetrieben wird, wie sie beispielsweise in der US 4 967 863 A beschrieben werden. Ein Riemen 239 wird durch die Riemenscheibe 238 angetrieben. Wenn der Riemen 239 straff gezogen wird, treibt er eine zweite Riemenscheibe 240 an. Eine Kupplungsanordnung 250 verursacht eine Drehbewegung der Riemenscheibe 240. Die Kupplungsanordnung 250 wird durch Steuermittel 254 in der Bedienerkabine 48 gesteuert. Ein zum Spannen dienende Riemenscheibe 256 wird auswählbar gegen den Riemen 239 gedrückt, um einen Antrieb der zweiten Riemenscheibe 240 zu erzielen. Die zum Spannen des Riemens 239 dienende Riemenscheibe 256 wird durch einen hydraulischen Zylinder 257, der durch die zugeordneten Steuermittel 254 gesteuert wird, gegen den Riemen 239 gedrückt.

Die Riemenscheibe 240 steht mit einem Ritzel 302 in Antriebsverbindung, das mit einer Kette 304 ausgestattet ist. Die Kette 304 wirkt mit Ritzeln 108, 110 zum Antrieb der quer angeordneten Entladeförderer 56, 58 und mit einem Ritzel 116 zum Antrieb des Entladeförderers 57 zum Fördern von Korn aus dem Sumpf 64 durch das vertikale Rohr 61 und das horizontale Entladerohr 59 zusammen. Das Ritzel 312 ist federvorgespannt, um die Spannung in der Kette 304 aufrechtzuerhalten.

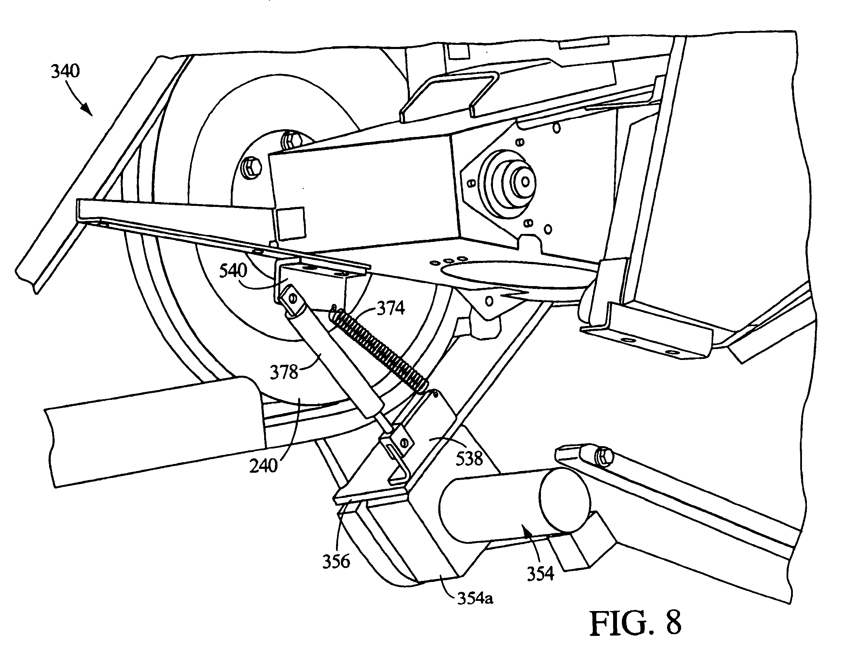

Erfindungsgemäß ist ein zusätzlicher Drehantrieb 340 bereitgestellt, um die Entladeförderer 56, 57, 58 zu drehen. Der zusätzliche Drehantrieb 340 umfasst eine dritte Riemenscheibe 350, die fest an der zweiten Riemenscheibe 240 und dem Ritzel 302 angebracht ist, um sich mit diesen zu drehen. Ein Motor 354 ist an einem Hebel 356 befestigt, der an einem Ende 357 schwenkbar mit einer festen Halterung am Chassis des Mähdreschers 10 verbunden ist. Der Motor 354 umfasst eine Ausgangswelle 355, an der eine Antriebsriemenscheibe 360 angebracht ist. Der Motor 354 ist vorzugsweise ein 12 V Gleichstromelektromotor, obwohl ein pneumatischer, hydraulischer oder anderer Motor auch unter den Erfindungsgedanken fällt. Der Motor 354 kann innerhalb eines bevorzugten Leistungsbereichs von 150 W bis 15 kW und einem Drehzahlbereich von 20 bis 200 Umdrehungen pro Minute liegen. Der Motor 354 kann beispielsweise 150 Watt und ein Drehmoment von 1,56 Nm und eine Stromaufnahme von 18,5 A bei Volllast haben. Durch die Verwendung eines Getriebes 354a (Figur 8) mit einem Übersetzungsverhältnis von ungefähr 20:1 treibt der Motor 354 die Ausgangswelle 355 unter Belastung mit etwa 80 Umdrehungen pro Minute an.

Ein Riemen 370 ist um die dritte Riemenscheibe 350 und um die Riemenscheibe 360 geschlungen. Eine Feder 374 ist mit einem freien Endabschnitt 375 des Hebels 356 und dem Ende 357 des Hebels 356 verbunden. Ein pneumatischer Zylinder 378 ist zwischen dem freien Endabschnitt 375 des Hebels 356 und dem Ende des Hebels 357 angeordnet. Eine Ausdehnung des Zylinders 378 gegen die Vorspannkraft der Feder 374 bedingt, dass sich der Hebel 357 nach unten dreht, im Uhrzeigersinn um das Ende 357, um den Riemen 370 zwischen den Riemenscheiben 350, 360 zu spannen. Sobald der Riemen 370 gespannt ist, verbringt die Riemenscheibe 360 die Riemenscheibe 350 in Drehung, wenn der Motor 354 angetrieben wird. Auf diese Weise werden die zweite Riemenscheibe 240 und das Ritzel 302 in Drehung versetzt.

Da der Motor 354 eine relativ kleine Ausgangsleistung hat und zur langsamen Ausgangsdrehung untersetzt wird, dreht sich die zweite Riemenscheibe 240 langsam. Im Vergleich dazu drehen sich die Entladeförderer 56, 57 und 58 beim Kornentladen mit 420 Umdrehungen pro Minute. Unter der Antriebswirkung des Motors 354 während des Reinigungsbetriebs drehen sich die Entladeförderer 56, 57, 58 mit etwa 25 Umdrehungen pro Minute. Eine derartig langsame Drehung ist vorteilhaft für einen Reinigungsvorgang des Vorratsbehälters 40, des horizontalen Entladerohrs 59 und um die Entladeförderer 56, 57, 58 herum.

Der Zylinder 378 umfasst eine Kolbenstangenseite 380 und eine Kolbenraumseite 382. Pneumatische Leitungen verbinden die Kolbenstangenseite 380 mit einem Anschluss eines elektromagnetischen Ventils 386. Die Figur 6 zeigt das elektromagnetische Ventil 386 in der eingeschalteten Stellung. In dieser Stellung ist unter Druck stehende Luft von einem Vorrat 388 mit der Kolbenraumseite 382 verbunden. Der Luftvorrat 388 kann ein externer Vorrat sein, der über eine Schnellkupplungsverbindung 389 oder eine andere Art von Kupplung mit der Kolbenraumseite 382 verbunden ist. Ein Auslass 390 zur Atmosphäre ist mit der Kolbenstangenseite 380 des Zylinders 378 verbunden. In die Kolbenraumseite 382 eingelassene Druckluft bedingt somit eine Ausstreckung einer Zylinderstange 378a aus dem Zylinderkörper 378b. Diese Bewegung spannt den Riemen 370. Wenn das elektromagnetische Ventil 386 nicht energetisiert ist, wird eine Spule 386a des Ventils 386 durch die Kraft einer Feder 386c nach oben in die andere Position verschoben. In der anderen Position drückt die Kolbenraumseite 382 des Zylinders 378 die darin enthaltene Luft zusammen, wenn sich die Kolbenstange 378a unter der Kraft der Feder 374 in den Zylinderkörper 378b zurückzieht, wobei der Druck der komprimierten Luft durch ein mit einem Auslass verbundenes Druckbegrenzungsventil 400, das auf einen Ablassdruck von 3,5 kPa eingestellt ist, begrenzt wird.

Eine elektronisches Steuersystem 406 umfasst die erforderliche Verschaltung, 12 V Stromversorgung und Zeitsteuerungselektronik, um das System zu betreiben. Der Betätigungsschalter 408 befindet sich vorzugsweise an einem spiralförmigen Anschlusskabel 409, das in das Steuersystem 406 hineingesteckt werden kann. In diesem Zusammenhang umfasst das Steuersystem 406 ein Kabel 406a, das sich bis in eine angehobene Position nahe der Oberseite des Vorratsbehälters 40 erstreckt und in einem Stecker 406b endet. Das Steuersystem 406 umfasst außerdem ein Kabel 406c, das sich in eine Position erstreckt, die vom Erdboden nahe des Motors 354 zugänglich ist und in einem Stecker 406d endet. Das Anschlusskabel 409 kann entweder in den Stecker 406b oder 406d gesteckt werden, um das Steuersystem 406 mittels des Schalters 408 zu steuern. Das ermöglicht dem Bediener, den Vorratsbehälter 40 von einer gegenüber dem Erdboden erhöhten Stelle aus zu reinigen, um die Drehung der Entladeförderer 56, 57, 58 während des Reinigens zu starten und anzuhalten, und ermöglicht außerdem einem Bediener auf dem Erdboden, die Schneckenförderer 56, 57, 58 zu starten und anzuhalten.

Das Steuersystem 406 umfasst eine Schaltleitung 410, die den Motor 354 auswählbar mit Leistung versorgt. Das Steuersystem 406 umfasst auch eine Betätigungsleitung 412 für das elektromagnetische Ventil 386. Das Steuersystem 406 ist auch mit Betätigungsleitungen 416 versehen, die zu einem oder mehreren hörbaren Alarmeinrichtungen 420a, 420b führen. Der Schalter 408 und das Anschlusskabel 409 können an verschiedenen Stellen, wie in Erdbodenhöhe und in Höhe des Vorratsbehälters 40 in das Steuersystem 406 eingesteckt werden.

Das Steuersystem 406 umfasst einen Zeitsteuerungsschaltkreis oder einen Zeitsteuerungsrelaisschalter, um eine Verzögerung bereitzustellen, während die Alarmeinrichtungen 420a, 420b Geräusche abgeben.

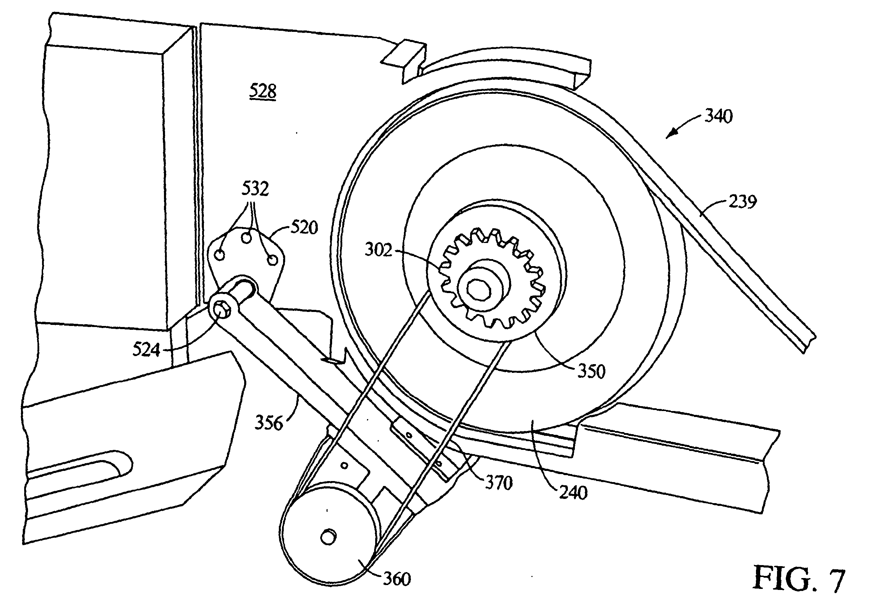

Die Figur 7 stellt den mechanischen Aufbau des zusätzlichen Drehantriebs 340 zeichnerisch dar. Der Hebel 356 ist durch einen Stutzen oder Stift 524 drehbar an einer Halterung 524 angebracht. Die Halterung 520 ist durch Befestigungselemente 532 an einer stationären Struktur 528 des Mähdreschers 10 befestigt.

Die Figur 8 stellt eine Halterung 538 dar, die an dem Hebel 356 befestigt ist, und eine Halterung 540, die an einer stationären Struktur 542 des Mähdreschers 10 befestigt ist. Der Zylinder 378 ist durch Stifte oder Bolzen (nicht gezeigt) mit den Halterungen 538, 540 verbunden. Die Feder 374 ist ebenfalls mit den Halterungen 538, 540 verbunden. Der Motor kann über ein Getriebe 354a mit der Ausgangswelle 355 verbunden sein, wenn erforderlich.

Beim Betrieb werden die Bereiche des Entladerohrs 59 und der quer verlaufenden Schneckenförderer 56, 58 saubergeblasen, während das Schneckenförderersystem langsam gedreht wird, um eine effiziente und schnelle Reinigung zu erzielen.

Ein erfindungsgemäßes Verfahren beinhaltet ein Ein- und Ausschalten des Systems. Die Vorgehensweise zum Einschalten des Systems weist die folgenden Schritte auf:
1. Ein entfernter Ort wird ausgewählt, um den Fernanschluss einzustecken, entweder auf Erdbodenhöhe oder auf Vorratsbehälterhöhe,
2. Das System wird mit Luft beaufschlagt,
3. Der Fernbedienungsschalter 408, der ein nichteinrastender Schalter ist, wird von Hand niedergedrückt und nach unten gehalten,
4. 12 V werden an die Zeitsteuerungselektronik gesandt und die hörbaren Alarmeinrichtungen 420a, 420b werden für eine vorbestimmte Zeitspanne aktiviert, wie z. B. 2 s. Während der vorbestimmten Zeitspanne wird der Motor 354 (noch) nicht aktiviert,
5. Nachdem die vorbestimmte Zeitspanne abgelaufen ist, schaltet die Zeitsteuerungselektronik die hörbaren Alarmeinrichtungen 420a, 420b aus und sendet 12 V an den Motor 354, so dass der Motor 354 anfängt, sich zu drehen. Der Motor 354 dreht sich mit etwa 80 Umdrehungen pro Minute, wobei der Riemen noch lose ist,
6. 12 V werden an das elektromagnetische Ventil 386 gesandt, so dass letzteres umgeschaltet wird und dem pneumatischen Zylinder 378 unter Druck stehende Luft bereitstellt,
7. Luft tritt in die Kolbenraumseite 382 des Zylinders 378 ein und der Luftdruck überwindet die Kraft der rückstellenden Feder 374,
8. Die Luft aus der Kolbenstangenseite 380 wird durch den Auslass 390 an die Umgebungsluft abgeleitet,
9. Der pneumatische Zylinder 378 drückt den sich drehenden Motor 354 gegen den Riemen 370 und die Riemenscheibe 240 dreht sich,
10. Die Entladeförderer 56, 57, 58 drehen sich wegen der Größenverhältnisse der Riemenscheiben mit etwa 25 Umdrehungen pro Minute,
11. An geeigneten Stellen angebrachte Luftdüsen und/oder manuell bewegte Düsen werden aktiviert, während sich die Entladeförderer 56, 57, 58 drehen, um eine effektive Reinigung zu erzielen.

Luftsysteme zur Reinigung sind in den Patentanmeldungen US 10/309978 und 10/309979 offenbart.

Das Ausschalten des Reinigungssystems erfolgt derart:
1. Der nichteinrastende angeschlossene Fernbedienungsschalter 408 wird deaktiviert, indem der Finger- oder Daumendruck von dem Schalter 408 entfernt wird,
2. Die 12 V Stromversorgung wird sofort von der Zeitsteuerungselektronik, dem elektromagnetischen Ventil 386 und dem Motor 354 abgetrennt,
3. Das elektromagnetische Ventil 386 bewegt sich und schaltet die Luftversorgung des Zylinders 378 ab,
4. Die Rückstellfeder 379 zieht die Riemenscheibe 360 außer Eingriff mit dem Riemen 370, da sie die Kraft des Zylinders 378 überwindet,
5. Die Kolbenstangenseite 380 des Zylinders 378 wird gelüftet, um Umgebungsluft in den Zylinder 378 zu lassen,
6. Die Luft auf der Kolbenraumseite 382 des Zylinders 378 wird an das Ventil 386 zurückgeführt,
7. Die Luft aus dem Zylinder strömt in das Druckbegrenzungsventil 400,
8. Der federinduzierte Druck ist höher als der Öffnungsdruck des Druckbegrenzungsventils, was erlaubt, dass Luft abgelassen wird, so dass sich der Zylinder 378 zurückziehen kann,
9. Das System ist dann effektiv ausgeschaltet.

Das erfindungsgemäße System stellt Sicherheitsvorteile bereit. Der Zeitsteuerungsschaltkreis verzögert den Start bewegter Teile des Systems, während vor der Bewegung von Teilen hörbare Alarmeinrichtungen erschallen. Sobald er sich bewegt, dreht der Motor 354 die Entladeförderer 56, 57, 58 mit geringer Geschwindigkeit. Die Kraft des Systems ist relativ schwach. Das System schaltet sich bei Abfall der Spannung oder der Druckluft effektiv ab. Es benötigt sowohl Druckluft als auch Spannung, um eingeschaltet zu werden. Der Luftdruck muss hoch genug gehalten werden, um die Federrückstellkraft zu überwinden, die 200 N betragen kann. Der Schalter 408 wird manuell betätigt und rastet nicht ein.

## Patentansprüche

1. Erntemaschine, insbesondere Mähdrescher (10), mit einem Vorratsbehälter (40) für geerntetes Erntegut und einem Entladeförderer (56, 57, 58), der mit einer Betriebsgeschwindigkeit betreibbar ist, um Erntegut aus dem Vorratsbehälter (40) hinauszufördern, **gekennzeichnet durch** einen zusätzlichen Drehantrieb (340), der bei einer Reinigung des Vorratsbehälters (40) antreibbar ist und eingerichtet ist, den Entladeförderer (56, 57, 58) mit einer Geschwindigkeit anzutreiben, die kleiner ist als die Betriebsgeschwindigkeit.

2. Erntemaschine nach Anspruch 1, **dadurch gekennzeichnet, dass** der zusätzliche Drehantrieb (340) einen Motor (354) und eine trennbare Kupplungsanordnung zwischen dem Motor (354) und dem Entladeförderer (56, 57, 58) umfasst.

3. Erntemaschine nach Anspruch 2, **dadurch gekennzeichnet, dass** der Motor (354) ein Elektromotor ist.

4. Erntemaschine nach Anspruch 2 oder 3, **dadurch gekennzeichnet, dass** die Kupplungsanordnung eine Riemenscheibe (360) umfasst, die mit einer rotierbaren Ausgangswelle (355) des zusätzlichen Drehantriebs (340) verbunden ist und über einen Riemen (370) mit einer Riemenscheibe (350) verbunden ist, die mit dem Entladeförderer (56, 57, 58) in Antriebsverbindung steht.

5. Erntemaschine nach Anspruch 4, **dadurch gekennzeichnet, dass** die Kupplungsanordnung eine Spanneinrichtung für den Riemen (370) umfasst.

6. Erntemaschine nach Anspruch 5, **dadurch gekennzeichnet, dass** die Spanneinrichtung einen Zylinder (378) umfasst, der angeordnet ist, zum Ein- und Ausschalten der Kupplungsanordnung die Entfernung zwischen den Riemenscheiben (350, 360) zu verändern.

7. Erntemaschine nach einem der Ansprüche 1 bis 6, **dadurch gekennzeichnet, dass** der zusätzliche Drehantrieb (340) durch einen Schalter (408) ein- und ausschaltbar ist.

8. Erntemaschine nach Anspruch 7, **dadurch gekennzeichnet, dass** der Schalter (408) durch ein langgestrecktes Kabel (409) angeschlossen ist.

9. Erntemaschine nach Anspruch 7 oder 8, **dadurch gekennzeichnet, dass** der zusätzliche Drehantrieb (340) mit einem elektronischen Steuersystem (406) verbunden ist, das eine Zeitsteuerungselektronik und eine hörbare Alarmeinrichtung (420a, 420b) aufweist, und dass die Zeitsteuerungselektronik nach Betätigung des Schalters (408) für eine vorbestimmte Zeitspanne die Alarmeinrichtung (420a, 420b) aktiviert, nach deren Ablauf sie den Drehantrieb (340) aktiviert.

## Claims

1. Harvester, especially a combine harvester (10), having a storage container (40) for harvested crops and an unloading conveyor (56, 57, 58) which may be operated at an operating speed in order to convey harvested crops from the storage container (40), **characterised by** an additional rotary drive (340) which may be driven during cleaning of the storage container (40) and is arranged to drive the unloading conveyor (56, 57, 58) at a slower speed than the operating speed.

2. Harvester according to claim 1, **characterised in that** the additional rotary drive (340) comprises a motor (354) and a separable clutch arrangement between the motor (354) and the unloading conveyor (56, 57, 58).

3. Harvester according to claim 2, **characterised in that** the motor (354) is an electric motor.

4. Harvester according to claim 2 or 3, **characterised in that** the clutch arrangement comprises a pulley (360) which is connected to a rotary output shaft (355) of the additional rotary drive (340) and is connected via a belt (370) to a pulley (350) which is connected to the unloading conveyor (56, 57, 58) to drive same.

5. Harvester according to claim 4, **characterised in that** the clutch arrangement includes a tensioning device for the belt (370).

6. Harvester according to claim 5, **characterised in that** the tensioning device comprises a cylinder (378) which is arranged to alter the distance between the pulleys (350, 360) for switching the clutch arrangement on and off.

7. Harvester according to one of claims 1 to 6, **characterised in that** the additional rotary drive (340) may be switched on and off by a switch (408) .

8. Harvester according to claim 7, **characterised in that** the switch (408) is connected by means of an elongated cable (409).

9. Harvester according to claim 7 or 8, **characterised in that** the additional rotary drive (340) is connected to an electronic control system (406) which has a timer and an audible alarm (420a, 420b) and **in that**, on actuation of the switch (408), the timer activates the alarm (420a, 420b) for a predetermined period of time, on the expiry of which it activates the rotary drive (340).

## Revendications

1. Machine de récolte, en particulier moissonneuse-batteuse (10), comprenant un réservoir de stockage (40) pour les produits récoltés et un convoyeur de décharge (56, 57, 58), qui peut être actionné avec une vitesse de service, afin de transporter les produits récoltés hors du réservoir de stockage (40), **caractérisée par** un entraînement rotatif (340) supplémentaire qui peut être actionné lors d'un nettoyage du réservoir de stockage (40) et est aménagé pour entraîner le convoyeur de décharge (56, 57, 58) avec une vitesse inférieure à la vitesse de service.

2. Machine de récolte selon la revendication 1, **caractérisée en ce que** l'entraînement rotatif (340) supplémentaire comprend un moteur (354) et un dispositif de couplage séparable entre le moteur (354) et le convoyeur de décharge (56, 57, 58).

3. Machine de récolte selon la revendication 2, **caractérisée en ce que** le moteur (354) est un moteur électrique.

4. Machine de récolte selon la revendication 2 ou 3, **caractérisée en ce que** le dispositif de couplage comprend une poulie à courroie (360), qui est reliée à un arbre de sortie (355) rotatif de l'entraînement rotatif (340) supplémentaire et est reliée par une courroie (370) à une poulie à courroie (350) qui est en liaison d'entraînement avec le convoyeur de décharge (56, 57, 58).

5. Machine de récolte selon la revendication 4, **caractérisée en ce que** le dispositif de couplage comprend un dispositif de serrage pour la courroie (370).

6. Machine de récolte selon la revendication 5, **caractérisée en ce que** le dispositif de serrage comprend un cylindre (378), qui est agencé pour modifier la distance entre les poulies à courroie (350, 360) pour l'activation et la désactivation du dispositif de couplage.

7. Machine de récolte selon l'une quelconque des revendications 1 à 6, **caractérisée en ce que** l'entraînement rotatif (340) supplémentaire peut être activé et désactivé par un interrupteur (408).

8. Machine de récolte selon la revendication 7, **caractérisée en ce que** l'interrupteur (408) est raccordé par un câble (409) de grande longueur.

9. Machine de récolte selon la revendication 7 ou 8, **caractérisée en ce que** l'entraînement rotatif (340) supplémentaire est relié à un système de commande (406) électronique présentant une électronique de commande temporelle et un dispositif d'alarme (420a, 420b) audible et **en ce que** l'électronique de commande temporelle actionne le système d'alarme (420a, 420b) après l'actionnement de l'interrupteur (408) pour un laps de temps prédéfini, après l'écoulement duquel elle active l'entraînement rotatif (340).
